(19) Europäisches Patentamt

European Patent Office

Office européen des brevets

(11) **EP 2 070 665 A2**

(12) **EUROPÄISCHE PATENTANMELDUNG**

(43) Veröffentlichungstag:
**17.06.2009 Patentblatt 2009/25**

(51) Int Cl.:
***B25J 9/16*** *(2006.01)*

(21) Anmeldenummer: **08021105.5**

(22) Anmeldetag: **04.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **11.12.2007 DE 102007059481**

(71) Anmelder: **KUKA Roboter GmbH**
**86165 Augsburg (DE)**

(72) Erfinder:
 • **Zimmermann, Uwe**
  **86152 Augsburg (DE)**
 • **Hietmann, Gerhard**
  **86405 Herbertshofen (DE)**

(74) Vertreter: **Schlotter, Alexander Carolus Paul**
**Wallinger Ricker Schlotter Foerstl**
**Patent- und Rechtsanwälte**
**Zweibrückenstrasse 5-7**
**80331 München (DE)**

(54) **Verfahren und Vorrichtung zur Bereichsüberwachung eines Manipulators**

(57) Nach einem erfindungsgemäßen Verfahren zur Bereichsüberwachung eines Manipulators, insbesondere eines Roboters (1), wird eine von dem Manipulator anzufahrenden Soll-Position bestimmt (S20), geprüft, ob diese Soll-Position in einem zulässigen Positionsbereich liegt (S40), und eine Alarmmeldung ausgegeben, wenn die Soll-Position nicht in dem zulässigen Positionsbereich liegt (S50).

Fig. 2

$$S10 \quad x_S(t_E) = (x_E, y_E, z_E, \alpha_E, \beta_E, \gamma_E)$$

$$S20 \quad x_S(t_1), x_S(t_2), \vdots$$

5

$$S30 \quad q_S = (q_1, q_2 \dots q_6) = F^{-1}(x_S)$$

q

$$S80 \quad \Delta = q_S - q$$

$$S90 \quad \Delta \in \Delta_Z?$$

$$S60 \quad |x_S - F(q_S)| < \varepsilon?$$

$$S40 \quad x_S \in X_Z?$$

$$S100 \quad A_1 \qquad S70 \quad A_2 \qquad S50 \quad A_3$$

4

**Beschreibung**

Die vorliegende Erfindung betrifft ein Verfahren zur Bereichsüberwachung eines Manipulators sowie eine Vorrichtung zur Durchführung eines solchen Verfahrens.

Ein Manipulator weist allgemein mehrere Glieder auf, die über translatorische und/oder rotatorische Gelenke miteinander verbunden und um die sogenannten Bewegungsachsen des Manipulators gegeneinander bewegbar sind. Die Bewegung des Manipulators kann durch Bedienpersonal gesteuert oder programmiert werden - in diesem Fall arbeitet der Manipulator als Roboter.

Sowohl im durch Bedienpersonal gesteuerten Betrieb als auch beim Abarbeiten eines Programms besteht die Gefahr einer Kollision eines Gliedes des Manipulators mit einem Hindernis. Solche Hindernisse können bereits vorab bekannt und temporär oder stationär in einem Arbeitsraum des Manipulators vorhanden sein. So bilden beispielsweise feststehende Ablagetische stationäre, an- und abtransportierte Werkstücke temporäre Hindernisse für einen Roboter in einer Fertigungszelle. Hindernisse können gleichermaßen unvorhergesehen auftauchen, wenn beispielsweise ein Mensch in den Arbeitsraum eintritt und von einer Arbeitsraumüberwachung als bewegtes Hindernis erkannt wird.

Um eine Kollision des Manipulators mit einem Hindernis zu vermeiden, ist es bekannt, zulässige Bereiche zu definieren, in denen der Manipulator sich bewegen darf. Beispielsweise können die Lagen und Orientierungen vorgegeben werden, die ein Endeffektor im Arbeitsraum einnehmen darf, ohne mit einem Hindernis zu kollidieren.

Hierzu schlägt die EP 1 267 234 B1 vor, Lage-Istwerte der Gelenke eines Handhabungsgerätes in eine Ist-Position eines Punktes im kartesischen Raum zu transformieren und zu prüfen, ob diese Ist-Position sich in einem zulässigen Bereich befindet.

Nachteilig erkennt das Verfahren nach der EP 1 267 234 B1 jedoch erst eine Kollision, wenn der Punkt bereits den zulässigen Bereich des kartesischen Raumes verlassen, i.e. der Manipulator gegebenenfalls bereits mit einem Hindernis kollidiert ist. Dies erhöht die Gefahr einer Beschädigung von Manipulator und Hindernis.

Aufgabe der vorliegenden Erfindung ist es daher, eine verbesserte Bereichsüberwachung eines Manipulators zur Verfügung zu stellen.

Diese Aufgabe wird durch die Merkmale des Anspruchs 1 gelöst. Anspruch 15 stellt eine Vorrichtung, Anspruch 16 bzw. 17 ein Computerprogramm bzw. ein Computerprogrammprodukt zur Durchführung eines Verfahrens nach Anspruch 1 unter Schutz. Die Unteransprüche betreffen vorteilhafte Weiterbildungen.

Nach einem erfindungsgemäßen Verfahren zur Bereichsüberwachung eines Manipulators, insbesondere eines Roboters, wird eine von dem Manipulator anzufahrende Soll-Position bestimmt, geprüft, ob diese Soll-Position in einem zulässigen Positionsbereich liegt, und eine Alarmmeldung ausgegeben, wenn die Soll-Position nicht in dem zulässigen Positionsbereich liegt.

Durch die Überwachung der Soll-Position kann bereits frühzeitig erkannt werden, dass der Manipulator den zulässigen Positionsbereich verlassen wird, wenn er die Soll-Position anfährt. Somit können aufgrund der Alarmmeldung frühzeitig geeignete Gegenmaßnahmen eingeleitet, beispielsweise die Soll-Position korrigiert, der Manipulator gebremst, stillgesetzt oder auf seiner bisherigen Bahn in umgekehrter Richtung zurückgefahren, eine optische und/oder akustische Warnung ausgegeben und/oder das Hindernis beseitigt werden. Insbesondere kann verhindert werden, dass Aktuatoren des Manipulators angesteuert werden, um die Soll-Position anzufahren, wenn die Alarmmeldung ausgegeben wird. Dies ist insbesondere bei Industrierobotern vorteilhaft, die aufgrund ihrer hohen Verfahrgeschwindigkeit und Masse sowie der begrenzten Rechengeschwindigkeit ihrer Steuerung bereits mit hoher Wucht mit einem Hindernis kollidiert sein können, wenn eine herkömmliche Bereichsüberwachung aufgrund einer Ist-Position des Roboters ein Verlassen des zulässigen, hindernisfreien Positionsbereiches erst erfasst.

Die Soll-Position ist bevorzugt eine Pose des Manipulators im Arbeitsraum. Als Arbeitsraum wird dabei der kartesische Raum bezeichnet, der von Gliedern des Manipulators ausgefüllt bzw. von einem Endeffektor des Manipulator erreicht werden kann. Die Soll-Position kann daher eine Lage, beschrieben beispielsweise durch kartesische, Zylinder- oder Polarkoordinaten in einem inertialfesten Koordinatensystem, und/oder eine Orientierung, beschrieben beispielsweise durch Euler- oder Kardanwinkel eines manipulatorfesten Referenz- gegen das inertialfeste Koordinatensystem, eines oder mehrerer Glieder des Manipulators umfassen. So kann beispielsweise eine Soll-Position durch drei kartesische Lagekoordinaten x, y, z und drei Orientierungswinkel $\alpha$, $\beta$, $\gamma$ eines endeffektorfesten Referenzkoordinatensystems, dessen Ursprung im Referenzpunkt ("Tool Center Point" TCP) des Manipulators liegt, relativ zu einem Inertialsystem beschrieben sein. Gleichermaßen kann die Soll-Position beispielsweise durch Denavit-Hartenberg-Parameter, Quaternionen oder dergleichen beschrieben werden. Zusätzlich oder alternativ zu einer Lage und/oder Orientierung eines Endeffektors kann die Soll-Position auch eine Lage und/oder Orientierung anderer Glieder des Manipulators umfassen. So kann beispielsweise bei einem redundanten, 7-achsigen Roboter die Lage und Orientierung eines gelenkig mit einer Basis des Roboters verbundenen ersten Gliedes zusammen mit der Lage und Orientierung des Endeffektors die Soll-Position bilden.

Eine im Arbeitsraum definierte Soll-Position ist zweckmäßig, da Hindernisse im allgemeinen im Arbeitsraum vorhanden sind und dort einfach beschrieben werden können. So kann beispielsweise eine Kollision eines Endeffektors mit einem Ablagetisch in einer Fertigungszelle einfach vermieden werden, indem der von dem Arbeitstisch eingenommene Arbeitsraum keinen zulässigen Positionsbereich für die Soll-Position bildet.

Gleichermaßen kann die Soll-Position jedoch auch eine Position des Manipulators in seinem Koordinatenraum sein. Die Pose des Manipulators im kartesischen Raum wird durch die Stellung der einzelnen Gelenke des Manipulators, beispielsweise die Winkellagen seiner Drehgelenke oder der diese aktuierenden Motoren bei einem Knickarmroboter oder die Verstellwege der Schubgelenke bei einem Portalroboter, eindeutig bestimmt. Ein Vektor mit den Stellungen der Gelenke bildet somit den Manipulator beschreibende Koordinaten, die Menge aller Vektoren den Koordinatenraum. Bei bekannter Geometrie des Manipulators kann ein Vektor des Koordinatenraum mittels Vorwärtskinematik eindeutig in eine Pose des Manipulators transformiert, bei nicht-redundanten Manipulatoren eine nicht-singuläre Pose im Arbeitsraum umgekehrt durch Rückwärtskinematik in einen Vektor im Koordinatenraum transformiert werden. Zulässige Bereiche im Arbeitsraum können daher auch im Koordinatenraum ausgedrückt werden und umgekehrt. Im Koordinatenraum können insbesondere zulässige Bereiche für bestimmte Gelenke, die sich beispielsweise aus deren konstruktivem Aufbau ergeben, einfach beschrieben werden. So kann bei einem Knickarmroboter, dessen Drehgelenke jeweils einen Verstellbereich von $\pm 90°$ haben, ein zulässiger Positionsbereich direkt durch Vorgabe eines entsprechenden n-dimensionalen Quaders im Koordinatenraum definiert werden.

Je nach Anwendungsfall kann daher die Soll-Position gleichermaßen im Arbeits- oder Koordinatenraum des Manipulators bestimmt werden. Sie kann dabei beispielsweise direkt, gleichermaßen on- oder off-line von einem Bedienpersonal eingegeben werden.

Bevorzugt wird die Soll-Position jedoch durch eine Bahnplanung bestimmt. Eine solche Bahnplanung kann bereits vorab erfolgen und sich beispielsweise aus einer Optimierung bezüglich Zeit, Energie oder anderer Kriterien, oder aufgrund einer Bearbeitungsaufgabe, beispielsweise dem Nachfahren einer Schweißnaht, einer Lackierbahn oder dergleichen ergeben. Werden dabei mögliche Hindernisse durch die Vorgabe entsprechender zulässiger Positionsbereiche berücksichtigt, kann eine erfindungsgemäße Bereichsüberwachung vorteilhaft bereits vorab bei einer solchen Bahnplanung eine Kollision mit Hindernissen vermeiden. Insbesondere kann während der Planung effizient verhindert werden, dass eine Bahnplanung eine Soll-Position in einem unzulässigen Bereich in Betracht zieht. Im Gegensatz zu einer Überwachung der Ist-Position kann so ein Optimierer frühzeitig in zulässige Richtungen gesteuert und so die Bahnplanung verbessert werden.

Gleichermaßen kann die Bahnplanung auch während des Betriebs des Manipulators erfolgen. So können beispielsweise für eine Transferbahn eines Industrieroboters nur Anfangs- und Endpose vorgegeben oder während eines Teachens nur Stützpunkte gespeichert werden. Eine vorzugsweise in der Steuerung des Manipulators angeordnete On-line-Bahnplanung kann dann zwischen diesen Stützpunkten, beispielsweise durch Spline-Interpolation eine Bahn generieren. Auch hier kann eine erfindungsgemäße Bereichsüberwachung eingesetzt werden und bereits frühzeitig das Abfahren einer unzulässigen Bahn verhindern.

Wird nur die Soll-Position des Manipulators überprüft, so kann es prinzipiell vorkommen, dass die Soll-Position sich noch innerhalb des zulässigen Positionsbereiches befindet, eine tatsächliche Ist-Position des Manipulators aufgrund einer Differenz zwischen Soll- und Ist-Position, die beispielsweise im Rahmen einer Proportional-, Differential- und/oder Integralregelung zur Positionsregelung des Manipulators bewusst vorhanden ist, sich bereits außerhalb des zulässigen Bereiches befindet. Mit anderen Worten würde eine reine Soll-Positionsüberwachung nur bemerken, ob ein Manipulator "beabsichtigt", den zulässigen Bereich zu verlassen, aber nicht, ob er ihn tatsächlich verlässt oder sogar bereits verlassen hat.

Daher wird in einer bevorzugten Ausführung der vorliegenden Erfindung zusätzlich zur Soll- auch eine aktuelle Ist-Position des Manipulators überwacht und in analoger Weise eine Alarmmeldung ausgegeben, wenn die Ist-Position nicht in einem zulässigen Positionsbereich liegt. Dabei kann, wie vorstehend mit Bezug auf die Soll-Position beschrieben, die Ist-Position eine Pose des Manipulators im Arbeitsraum oder eine Position in seinem Koordinatenraum sein. Die zulässigen Positionsbereiche für die Soll- und die Ist-Position sowie die Reaktionen auf entsprechende Alarmmeldungen müssen dabei nicht übereinstimmen. Beispielsweise kann ein zulässiger Positionsbereich für die Soll-Position enger sein als für die Ist-Position, um sicher zu stellen, dass der Istwert aufgrund eines Schleppabstandes zwischen Soll- und Ist-Position den zulässigen Positionsbereich nicht verlässt oder um bereits frühzeitig eine Alarmmeldung, die eine Umplanung der Bahn bewirkt, zu generieren, während eine Alarmmeldung, die den Manipulator stillsetzt, erst generiert wird, wenn die Ist-Position auch einen größeren zulässigen Positionsbereich verlässt und so unmittelbar eine Kollision droht.

Zusätzlich oder alternativ zur Prüfung, ob eine Ist-Position in einem zulässigen Positionsbereich liegt, kann auch ein sogenannter Schleppabstand überwacht werden. Hierdurch wird gewährleistet, dass sich die überwachte Soll-Position nicht zu sehr von der tatsächlich eine Kollision verursachenden Ist-Position unterscheidet und somit, wie durch die Überwachung der Ist-Position selber, sichergestellt wird, dass der Manipulator einen zulässigen Positionsbereich nicht verlässt, ohne dass die Überwachung dies erkennt.

Hierzu wird eine Ist-Position des Manipulators bestimmt, ein Schleppabstand als Differenz zwischen Soll- und Ist-Position ermittelt, geprüft, ob dieser Schleppabstand in einem zulässigen Schleppbereich liegt, und eine Alarmmeldung ausgegeben, wenn der Schleppabstand nicht in dem zulässigen Schleppbereich liegt. Wie vorstehend mit Bezug auf die Überwachung der Ist-Position selber erläutert, können sich die Alarmmeldungen, die ausgegeben werden, wenn die Soll-Position oder der Schleppabstand den jeweils zulässigen Bereich verlässt, sowie die Reaktionen auf diese Alarmmeldungen unterscheiden.

Im Vergleich zu einer zusätzlichen Überwachung der Ist-Position weist die Kombination einer Soll-Positions- mit einer Schleppabstandsüberwachung Vorteile auf. Denn durch eine Schleppabstandsüberwachung wird auch ein unzulässig hohes Auseinanderfallen von Soll- und Ist-Position erkannt, das beispielsweise dadurch entstehen kann, dass ein unbekanntes Hindernis die Bewegung des Manipulators behindert, dieser der Soll-Bahn also nicht wie gewünscht folgen kann, dass, etwa durch eine fehlerhafte Bahnplanung, falsche, beispielsweise sich sprunghaft ändernde Sollwerte vorgegeben werden, oder dass Ist-Werte sich aufgrund defekter Sensoren fehlerhaft ändern. Diese und andere Fehler beim Betrieb des Manipulators führen zu einem Schleppabstand, der nicht mehr im zulässigen Bereich liegt, und können daher aufgrund der Alarmmeldung der Bereichsüberwachung nach dieser bevorzugten Ausführung der vorliegenden Erfindung erkannt werden. Auf der anderen Seite kann aufgrund des begrenzten Schleppabstandes zugleich sichergestellt werden, dass Soll- und Ist-Position ausreichend nahe beieinander liegen, so dass die Überwachung nicht nur erkennt, dass der Manipulator "beabsichtigt", den zulässigen Bereich zu verlassen, sondern auch, dass er ihn tatsächlich verlässt bzw. verlassen hat.

Der Schleppabstand kann als Differenz zwischen Soll- und Ist-Position des Manipulators im Arbeitsraum oder im Koordinatenraum bestimmt werden. Dabei kann die Soll-Position in einem von dem Arbeits- und dem Koordinatenraum und die Ist-Position in dem gleichen oder dem anderen von dem Arbeits- und dem Koordinatenraum bestimmt werden.

Wie vorstehend ausgeführt, wird die Soll-Position bevorzugt im Arbeitsraum bestimmt, da dort zulässige Bereiche direkt und anschaulich vorgegeben werden können. Umgekehrt wird eine Ist-Stellung eines Manipulators vorteilhaft durch Erfassung der Stellungen seiner Gelenke, beispielsweise durch Drehgeber, Abstandssensoren oder dergleichen, also zunächst im Koordinatenraum bestimmt. Hierzu können die Stellungen der Gelenke direkt, beispielsweise ihre Winkellage, oder indirekt, beispielsweise durch Erfassung einer Winkellage eines das Gelenk aktuierenden Motors und Umrechung auf Basis einer Getriebeübersetzung bestimmt werden.

Zur Bestimmung des Schleppabstandes als Differenz zwischen Soll- und Ist-Position muss dann eine der beiden Positionen in den Raum transformiert werden, in dem die andere Position bestimmt wird. Anschließend kann der Schleppabstand als Differenz zwischen der einen transformierten Position und der anderen Position bestimmt werden. Ist also beispielsweise die Ist-Position im Koordinatenraum bestimmt, die Soll-Position im Arbeitsraum, so wird entweder die Ist-Position in den Arbeitsraum transformiert und der Schleppabstand als Differenz zwischen Soll- und transformierter Ist-Position im Arbeitsraum bestimmt oder die Soll-Position in den Koordinatenraum transformiert und der Schleppabstand als Differenz zwischen transformierter Soll- und Ist-Position im Koordinatenraum bestimmt.

Wie vorstehend erläutert, ist eine Transformation vom Koordinaten- in den Arbeitsraum durch Lösen der Vorwärtskinematik stets möglich. Eine Rücktransformation vom Arbeits- in den Koordinatenraum ist hingegen (ohne Nebenbedingungen) nur bei nicht-redundanten Manipulatoren in nicht-singulären Stellungen möglich und erfordert in der Regel die Lösung nicht-linearer Gleichungssysteme oder die Interpolation entsprechender Tabellen. Gleichwohl weist auch die Bestimmung des Schleppabstandes im Koordinatenraum Vorteile auf - insbesondere können dort auf einfache Weise Begrenzungen auf Gelenkebene berücksichtigt werden, die sich beispielsweise konstruktiv aus dem Aufbau der jeweiligen Gelenke ergeben.

Obwohl sowohl die Vorwärts- als auch - von entarteten Fällen abgesehen - die Rückwärtskinematik eindeutig ist und theoretisch Arbeits- und Koordinatenraum lokal durch die Jacobimatrix aufeinander abgebildet werden, können hierbei Fehler auftreten, wenn beispielsweise Geometriedaten, Achsorientierungen oder dergleichen fehlerhaft eingegeben werden. Dann kann beispielsweise die Situation auftreten, dass eine an sich zulässige Soll-Position im Arbeitsraum aufgrund der fehlerhaften Rückwärtskinematik auf eine falsche Soll-Gelenkstellung im Koordinatenraum abgebildet wird, die in Wahrheit einer unzulässigen Pose des Manipulators im Arbeitsraum entspricht. Fährt der Manipulator durch Minimierung des Schleppabstandes im Koordinatenraum, i.e. entsprechende Einregelung der einzelnen Gelenke, diese Position an, so nimmt er eine unzulässige Pose ein, ohne dass die Soll-Positionsüberwachung, die die ursprüngliche, korrekte und zulässige Soll-Position überprüft, oder die Schleppabstandsüberwachung, die nur das richtige Anfahren der unerkannt falschen Gelenkstellung erfasst, dies erkennen.

Daher wird in einer bevorzugten Ausführung der vorliegenden Erfindung die Übereinstimmung von Arbeits- und Konfigurationsraum überprüft. Dies kann beispielsweise dadurch erfolgen, dass extern, etwa über Abstandssensoren, Anfahren eines Kalibriertasters oder dergleichen, eine Ist-Position des Manipulators im Arbeitsraum erfasst und mit der transformierten Ist-Position verglichen wird, die durch Bestimmung der Gelenkstellungen im Koordinatenraum und Transformation in den Arbeitsraum berechnet wird. Dies ist jedoch aufwändig und erfordert zusätzliche Messapparaturen.

In einer bevorzugten Ausführung wird daher die transformierte Position zurück transformiert und mit der Ausgangsposition vor der Transformation verglichen. Beispielsweise kann die Soll-Position bereits durch eine Einrichtung, die die Bahnplanung durchführt, in den Koordinatenraum transformiert werden. Von dieser transformierten Soll-Position wird anschließend in der Überwachungseinrichtung, die das erfindungsgemäße Verfahren durchführt und als separate Einrichtung ausgebildet sein kann, die durch Sensoren erfasste Gelenkstellung subtrahiert, um den Schleppabstand zu ermitteln. Anschließend transformiert die Überwachungseinrichtung ihrerseits die transformierte Soll-Position aus dem Koordinaten- in den Arbeitsraum zurück, wo sie mit der von der Bahnplanung bestimmten Soll-Position verglichen wird. Überschreitet die Abweichung dabei ein die Rechenungenauigkeiten übersteigendes Maß, wird ein Fehler erkannt und eine entsprechende Alarmmeldung ausgegeben. Da es äußerst unwahrscheinlich ist, dass in der Einrichtung, die die Bahnplanung durchführt, und in der Überwachungseinrichtung, die das erfindungsgemäße Verfahren durchführt, einander kompensierende Fehler auftreten, kann hierdurch auf einfache Weise sichergestellt werden, dass unzulässige Soll- und Ist-Positionen sowohl im Koordinaten- als auch im Arbeitsraum zuverlässig erkannt werden.

Alternativ oder zusätzlich zu einer solchen Rücktransformation können auch andere Verfahrensschritte vorteilhafterweise redundant oder diversitär ausgeführt und hierzu beispielsweise auf unterschiedlichen Einrichtungen, insbesondere in verschiedenen Mikroprozessoren, und/oder in verschiedenen Algorithmen implementiert sein. So kann beispielsweise eine Transformation vom Arbeits- in den Koordinatenraum in einem ersten Mikroprozessor durch direktes numerisches Lösen der Rückwärtskinematik, in einem zweiten Mikroprozessor durch Interpolation gespeicherter Tabellenwerte bestimmt werden. Nur wenn die Abweichung beider Ergebnisse voneinander einen vorgegebenen Grenzwert nicht übersteigt, wird das Ergebnis als sicher eingestuft und im Verfahren weiter verwendet.

Der zulässige Bereich kann insbesondere durch Vorgabe eines oder mehrerer Minimal- und/oder Maximalwerte für die einzelnen Komponenten der Soll-Position bzw. des Schleppabstandes definiert werden. Dabei versteht es sich, dass unzulässige Bereiche, in denen beispielsweise Kollisionsgefahr besteht, einfach durch entsprechende Vorgabe komplementärer zulässiger Bereiche beschrieben werden können. Darf beispielsweise ein Endeffektor eines Manipulators eine gewisse Maximalhöhe nicht überschreiten, kann der zulässige Bereich durch diese Maximalhöhe nach oben hin als Maximalwert begrenzt werden. Insbesondere kann ein zulässiger Bereich auch aus mehreren, nicht notwendig zusammenhängenden, Einzelbereichen zusammengesetzt sein, wobei vorteilhaft der zulässige Bereich bzw. seine Einzelbereiche durch einfache geometrische Figuren, insbesondere Quader, Kugeln o.ä. bestimmt sein können, um ihre Eingabe durch das Bedienpersonal zu erleichtern.

Ein zulässiger Bereich kann fest vorgegeben oder in Abhängigkeit von einem Zustand des Manipulators, insbesondere einer Bewegungsgeschwindigkeit, und/oder in Abhängigkeit von einem Umgebungszustand, insbesondere der An- oder Abwesenheit von Hindernissen bestimmt werden. So kann beispielsweise der zulässige Bereich um den Bereich eines neu hinzukommenden Hindernisses (etwa eines in eine Fertigungszelle einfahrenden Werkstückes) verkleinert, um den Bereich eines entfernten Hindernisses (etwa eines aus der Fertigungszelle ausfahrenden Werkstückes) vergrößert, oder bei höheren Bewegungsgeschwindigkeiten verkleinert werden, um den längeren Bremswegen des Manipulators Rechnung zu tragen.

Vorstehend wurde stets auf die Position des Manipulators Bezug genommen. Insbesondere aufgrund von Motormomentbegrenzungen, die nur maximale positive und negative Beschleunigungen gestatten, werden jedoch zusätzlich oder alternativ zu Soll-Positionen häufig auch Soll-Beschleunigungen, i.e. Soll-Positionsänderungen über der Zeit vorgegeben. Befindet sich ein Mensch im Arbeitsbereich eines Manipulators, soll aus Sicherheitsgründen der Manipulator eine zulässige Maximalgeschwindigkeit, beispielsweise 250 mm/s nicht überschreiten. Somit werden zusätzlich oder alternativ zu Soll-Positionen häufig auch Soll-Geschwindigkeiten, i.e. ebenfalls Soll-Positionsänderungen über der Zeit vorgegeben. Um Schwingungsanregungen zu vermeiden, soll ein Manipulator sich möglichst ruckarm bewegen. Hierzu können beispielsweise die Soll-Beschleunigungsänderungen, i.e. wiederum Soll-Positionsänderungen über der Zeit vorgegeben werden. Umgekehrt werden anstelle von Ist-Positionen, beispielsweise über Tachogeneratoren, häufig Ist-Geschwindigkeiten erfasst und gegebenenfalls erst zu Ist-Positionen integriert.

Die vorliegende Erfindung ist gleichermaßen für die Überwachung von Soll-Positionsänderungen, insbesondere einer ein- oder mehrfachen Ableitung einer Position nach der Zeit, zusätzlich oder alternativ zur Überwachung von Soll-Positionen geeignet, wobei bevorzugt zusätzlich oder alternativ zur Überwachung einer Ist-Position bzw. eines Schleppabstandes als Differenz zwischen Soll- und Ist-Position eine Überwachung einer Ist-Geschwindigkeit, Ist-Beschleunigung und/oder einer höheren Ableitung einer Ist-Position nach der Zeit bzw. eines Schleppabstandes als Differenz zwischen Soll- und Ist-Geschwindigkeit, -beschleunigung und/oder höheren Ableitungen nach der Zeit durchgeführt wird. Hierzu ist in der vorstehenden Beschreibung lediglich der Ausdruck "-Position" durch "-Positionsänderung" ersetzt zu denken, wobei die Ausführungen mutatis mutandis auch für die Geschwindigkeits- und/oder Beschleunigungsüberprüfung gelten. Der Begriff "Positionsänderung" umfasst somit vorliegend insbesondere die Änderung einer Position über der Zeit, i.e. eine Geschwindigkeit, die Änderung einer Geschwindigkeit über der Zeit, i.e. eine Beschleunigung, die Änderung einer Beschleunigung über der Zeit und/oder beliebig höhere Zeitableitungen.

Beispielsweise wird in einer Weiterbildung einer der vorstehend beschriebenen Ausführungen zusätzlich eine von dem Manipulator zu fahrende Soll-Positionsänderung über der Zeit, i.e. Soll-Geschwindigkeit bestimmt, geprüft, ob diese Soll-Geschwindigkeit in einem zulässigen Geschwindigkeitsbereich liegt, und eine Alarmmeldung ausgegeben, wenn die Soll-Geschwindigkeit nicht in dem zulässigen Geschwindigkeitsbereich liegt. Zusätzlich kann eine Ist-Geschwindigkeit des Manipulators bestimmt, ein Schleppabstand als Differenz zwischen Soll- und Ist-Geschwindigkeit ermittelt, geprüft, ob dieser Schleppabstand in einem zulässigen Schleppbereich liegt, und eine Alarmmeldung ausgegeben werden, wenn der Schleppabstand nicht in dem zulässigen Schleppbereich liegt. Soll- bzw. Ist-Positionsänderungen über der Zeit, i.e. Soll- bzw. Ist-Geschwindigkeiten können dabei beispielsweise über numerische Differentation, insbesondere als Differenz zweier zeitlich aufeinander folgender Positionen, gegebenenfalls dividiert durch den zeitlichen Abstand beider Positionen, bestimmt werden. Als weitere Variante kann, zusätzlich zur Soll-Geschwindigkeitsüberwachung anstelle der Geschwindigkeits-Schleppfehlerüberwachung beispielsweise auch eine Überwachung des Positions-Schleppabstandes als Differenz zwischen Soll-Position und Ist-Position erfolgen. Mit einer Überwachung des Positions-Schleppabstandes kann sichergestellt werden, dass die Soll-Positionen und alle hieraus abzuleitenden Soll-Größen nahezu identisch mit den entsprechenden Ist-Größen sind.

Weitere Vorteile und Merkmale ergeben sich aus den Unteransprüchen und den Ausführungsbeispielen. Hierzu zeigt, teilweise schematisiert:

Fig. 1: einen Roboter mit Arbeitsraum; und

Fig. 2: eine Überwachungsvorrichtung nach einer Ausführung der vorliegenden Erfindung.

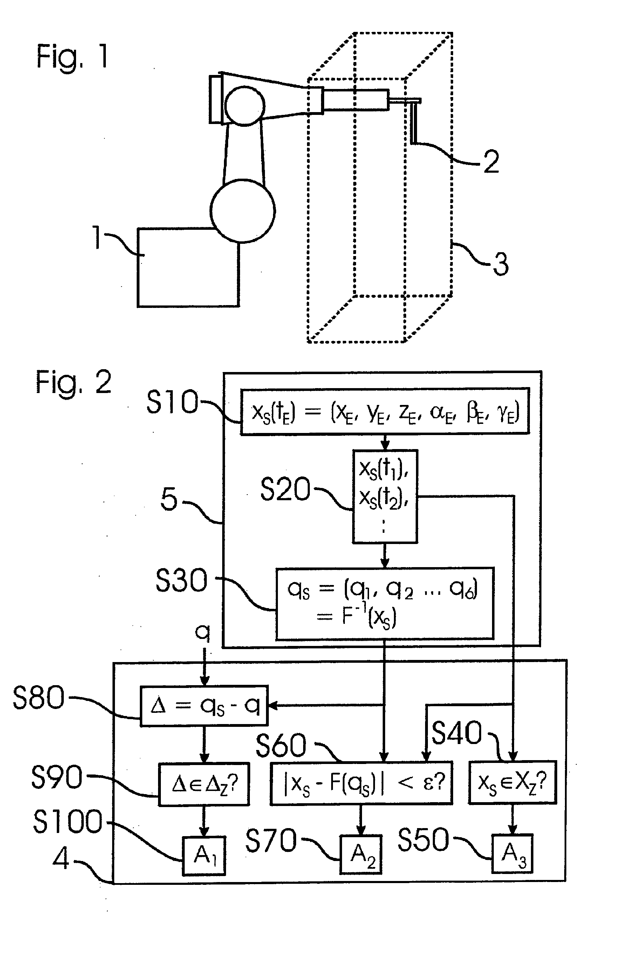

Fig. 1 zeigt schematisch einen sechsachsigen Knickarmroboter 1, dessen einzelne Glieder über Drehgelenke miteinander verbunden sind. Jedes Drehgelenk wird durch einen Elektromotor (nicht dargestellt) aktuiert, seine Winkellage $q_i$ (i = 1,...6) von einem Drehencoder (nicht dargestellt) erfasst. Diese Winkellagen der sechs Drehgelenke bilden zusammen einen Vektor $q = (q_1, q_2, \cdots q_6)$, wobei die Menge aller vom Roboter 1 einnehmbaren Winkellagen den Koordinatenraum $\mathbf{Q} = \{q\}$ definieren.

Jeder Position $\mathbf{q}$ im Koordinatenraum $\mathbf{Q}$ entspricht genau eine Pose $\mathbf{x}$ des Roboters 1 im kartesischen Raum, der in Fig. 1 dargestellt ist. Insbesondere wird durch die Vorwärtskinematik $\mathbf{F(q)}$ jeder Gelenkstellung $(q_1, q_2, \cdots q_6)$ eine Lage (x, y, z) und eine Orientierung $(\alpha, \beta, \gamma)$ seines TCPs 2 zugeordnet, wobei (x, y, z) die Lage des Ursprungs eines TCP-festen Koordinatensystems in kartesischen Koordinaten und $(\alpha, \beta, \gamma)$ die Orientierung dieses TCP-festen Koordinatensystems in Euler-Winkeln relativ zu einem inertialfesten Koordinatensystem beschreiben. Diese sechs Größen bilden zusammen eine Pose $\mathbf{x} = (x, y, z, \alpha, \beta, \gamma)$ des Roboters 1, die Menge aller vom Roboter 1 einnehmbaren Posen den Arbeitsraum $\mathbf{X} = \{\mathbf{x}\}$ so dass gilt:

$$\mathbf{x} = \mathbf{F(q)} \text{ bzw. } \mathbf{X} = \mathbf{F(Q)} \qquad (1).$$

In nicht-singulären Posen kann hierzu die Rückwärtskinematik

$$\mathbf{q} = \mathbf{F}^{-1}(\mathbf{x}) \qquad (2)$$

gelöst werden.

Um eine Kollision mit Personen, weiteren Robotern oder anderen Einrichtungen in einer Fertigungszelle (nicht dargestellt) zu vermeiden, ist der zulässige Positionsbereich $\mathbf{X}_z$ im Arbeitsraum durch den in Fig. 1 strichliert eingezeichneten Quader 3 vorgegeben, in dem sich der TCP 2 bewegen darf.

Gibt nun eine Bedienperson in einem ersten Schritt S10 über eine Eingabeeinrichtung 5, die in einer Robotersteuerung implementiert sein kann, eine gewünschte Endposition $\mathbf{x}_s(t_E) = (x_E, y_E, z_E, \alpha_E, \beta_E, \gamma_E)$ vor, die der Roboter 1 zur Zeit $t_E$ erreichen soll, so bestimmt ein Interpolar hierzu Stützpunkte $\mathbf{x}_s(t_1), \mathbf{x}_s(t_2),...$ die der Roboter 1 nacheinander anfahren und zu den Zeiten $t_1, t_2,...$ erreichen soll. Diese werden durch den in der Eingabeeinrichtung 5 implementierten Interpolator in einem Schritt S20 sukzessive als Soll-Positionen $\mathbf{x}_s$ ausgegeben und anschließend in einem Schritt S30 jeweils unter Lösung der Rückwärtskinematik (2) in eine entsprechende Winkellage $\mathbf{q}_s$ transformiert:

$$\mathbf{q}_S = \mathbf{F}^{-1}(\mathbf{x}_S) \qquad (2')$$

Diese Soll-Winkellage $q_s$ wird zusammen mit der Soll-Position $x_s$ in eine Überwachungseinrichtung 4 übergeben, die von den Drehencodern auch die von diesen bestimmten, tatsächlich im Roboter 1 anliegenden Winkellagen $q$ erhält.

Die Überwachungseinrichtung 4 prüft nun in einem Schritt S40, ob die Soll-Position $x_s$ in dem zulässigen, durch den Quader 3 definierten Positionsbereich $x_z$ liegt. Hierzu wird komponentenweise geprüft, ob die Lage- und Orientierungskoordinaten $(x_s, y_s, zs, \alpha_s, \beta s, \gamma_s) = x_s$ jeweils innerhalb bestimmter Minimal- und Maximalwerte liegen:

$$\mathbf{x_s} \in \mathbf{X_z} \Leftrightarrow x_{min} \leq x_S \leq x_{max} \text{ und } y_{min} \leq y_S \leq y_{max} \text{ und } .... \gamma_{min} \leq \gamma_S \leq \gamma_{max}. \qquad (3)$$

Ist dies nicht der Fall, so gibt die Überwachungseinrichtung 4 in einem Schritt S50 eine Alarmmeldung $A_3$ aus, die an den Interpolator zurückgeführt wird und eine geänderte Bahnplanung initialisiert (nicht dargestellt). Wird mehrfach hintereinander eine geänderte Bahnplanung initiiert, erkennt der Interpolator, dass die gewünschte Endposition $x_S(t_E)$ im zulässigen Positionsbereich $\mathbf{X_z}$ nicht erreichbar ist und informiert die Bedienperson.

Ergibt die Prüfung in Schritt S40, dass die Soll-Position $x_S$ in dem zulässigen Positionsbereich $\mathbf{X_z}$ liegt, prüft die Überwachungseinrichtung 4 in einem Schritt S60, ob die zugrunde liegende Transformation korrekt ist. Hierzu berechnet sie unter Lösung der Vorwärtskinematik (1) die Soll-Position $x_S = \mathbf{F(q}_s)$ im Arbeitsraum, die sich aus der Soll-Winkellage $q_s$ ergibt, und vergleicht diese, beispielsweise durch Bildung einer quadratischen Norm, mit der von dem Interpolator erhaltenen Soll-Position $x_s$. Ist die Abweichung $| x_s - \mathbf{F(q}_s) |$ größer als ein Fehlermaß $\varepsilon$, so liegt ein Fehler bei der Umrechung zwischen Arbeits- und Koordinatenraum vor, und die Überwachungseinrichtung 4 gibt in Schritt S70 eine Alarmmeldung $A_2$ aus, die zu einer Stillsetzung des Roboters 1 führt.

Ergibt die Prüfung in Schritt S60, dass die Abweichung $| x_s - \mathbf{F(q}_s) |$ kleiner oder gleich dem Fehlermaß $\varepsilon$ ist, bestimmt die Überwachungseinrichtung 4 in einem Schritt S80 den Schleppabstand $\Delta$ als Differenz zwischen der Soll-Winkellage $q_s = \mathbf{F}^{-1}(x_S)$, i.e. der in Schritt S30 transformierten Soll-Position $x_s$, und der von den Drehencodern bestimmten Ist-Position $q$ im Koordinatenraum. Liegt dieser Schleppabstand nicht in einem zulässigen Schleppbereich $\Delta_Z$ (S90: "nein"), so weicht die tatsächliche, aufgrund der Ist-Position $q$ im Koordinatenraum vom Roboter 1 bzw. seinem TCP 2 im Arbeitsraum eingenommene Pose $x = \mathbf{F(q)}$ unzulässig stark bzw. in eine unzulässige Richtung von der anzufahrenden Soll-Position $x_S$ ab, so dass die Gefahr besteht, dass diese eingenommene Pose $x$ außerhalb des zulässigen Bereichs $\mathbf{X_Z}$ liegt, i.e. der TCP 2 sich außerhalb des Quaders 3 befindet, obwohl die Soll-Position $x_S$ innerhalb des Quaders liegt (S40: "ja"). Daher gibt die Überwachungseinrichtung 4 in Schritt S100 eine Alarmmeldung $A_1$ aus, die zu einer Stillsetzung des Roboters 1 führt.

Der zulässige Schleppbereich $\Delta_Z$ kann beispielsweise so definiert sein, dass eine größere Abweichung in Richtung zum zulässigen Positionsbereichs hin und nur eine geringere oder keine Abweichung in Richtung vom zulässigen Positionsbereichs weg zulässig ist. Denn weicht die Ist- von der Soll-Position in Richtung zum zulässigen Positionsbereichs hin ab, so ist bei innerhalb des zulässigen Positionsbereichs liegender Soll-Position (S40: "ja") damit gewährleistet, dass auch die Ist-Position innerhalb des zulässigen Positionsbereichs liegt.

Sind die Prüfungen in den Schritten S40, S60 und S90 alle positiv, ist gewährleistet, dass (S40: "ja") die anzufahrende Soll-Position in dem zulässigen Bereich liegt, dass (S90: "ja") die Ist-Position in dem zulässigen Bereich liegt, und dass (S60: "ja") die dabei verwendete Transformation korrekt ist, wird die Soll-Winkellage $q_S$ als neuer Sollwert an die Einzelgelenk-PID-Regler (nicht dargestellt) der Elektromotoren weitergeben.

Damit wird vorteilhaft ein Sollwert, der den Roboter 1 in einen unzulässigen Bereich überführen würde, gar nicht an die Aktuatoren ausgegeben, so dass ein Verlassen des zulässigen Bereichs bereits frühzeitig verhindert wird.

Bezugszeichenliste

1    Roboter
2    Tool Center Point (TCP)
3    zulässiger Bereich
4    Überwachungseinrichtung
5    Steuerung

**Patentansprüche**

1. Verfahren zur Bereichsüberwachung eines Manipulators, insbesondere eines Roboters (1), mit den Schritten:

   Bestimmen (S20, S30) einer von dem Manipulator anzufahrenden Soll-Position ($\mathbf{x}_S$, $\mathbf{q}_S$) und/oder Soll-Positionsänderung ($\frac{d^k q_S}{dt^k}$);

   Prüfen (S40), ob diese Soll-Position bzw. Soll-Positionsänderung in einem zulässigen Positionsbereich ($\mathbf{X}_Z$) liegt; und
   Ausgeben einer Alarmmeldung ($A_3$), wenn die Soll-Position bzw. Soll-Positionsänderung nicht in dem zulässigen Positionsbereich liegt (S50).

2. Verfahren nach Anspruch 1, **dadurch gekennzeichnet, dass** die Soll-Position eine Pose ($\mathbf{x}$) des Manipulators im Arbeitsraum bzw. die Soll-Positionsänderung die Änderung einer Pose des Manipulators im Arbeitsraum ist.

3. Verfahren nach Anspruch 2, **dadurch gekennzeichnet, dass** die Soll-Position eine Lage (x, y,z) und/oder Orientierung ($\alpha$, $\beta$, $\gamma$) wenigstens eines Gliedes (2) des Manipulators, insbesondere eines manipulatorfesten Referenzkoordinatensystems, bzw. die Soll-Positionsänderung die Änderung einer Lage und/oder Orientierung wenigstens eines Gliedes des Manipulators, insbesondere eines manipulatorfesten Referenzkoordinatensystems umfasst.

4. Verfahren nach Anspruch 1, **dadurch gekennzeichnet, dass** die Soll-Position eine Position ($\mathbf{q}$) des Manipulators im Koordinatenraum bzw. die Soll-Positionsänderung die Änderung einer Position des Manipulators im Koordinatenraum ist.

5. Verfahren nach Anspruch 4, **dadurch gekennzeichnet, dass** die Soll-Position die Stellung (q1, ..., q6) von einem oder mehreren Gelenken des Manipulators bzw. die Soll-Positionsänderung die Änderung von Stellungen von einem oder mehreren Gelenken des Manipulators umfasst.

6. Verfahren nach einem der vorhergehenden Ansprüche, **dadurch gekennzeichnet, dass** die Soll-Position bzw. die Soll-Positionsänderung durch eine Bahnplanung (S20), insbesondere während des Betriebs des Manipulators, bestimmt wird.

7. Verfahren nach einem der vorhergehenden Ansprüche, **gekennzeichnet durch** die Schritte:

   Bestimmen einer Ist-Position ($\mathbf{q}$) und/oder einer Ist-Positionsänderung;
   Bestimmen (S80) eines Schleppabstandes ($\Delta$) als Differenz zwischen Soll- und Ist-Position bzw. zwischen Soll- und Ist-Positionsänderung;
   Prüfen (S90), ob dieser Schleppabstand in einem zulässigen Schleppbereich ($\Delta_Z$) liegt; und
   Ausgeben (S100) einer Alarmmeldung ($A_1$), wenn der Schleppabstand nicht in dem zulässigen Schleppbereich liegt.

8. Verfahren nach Anspruch 7, **dadurch gekennzeichnet, dass** der Schleppabstand als Differenz zwischen Soll- und Ist-Position bzw. zwischen Soll- und Ist-Positionsänderung des Manipulators im Arbeitsraum bestimmt wird.

9. Verfahren nach Anspruch 7, **dadurch gekennzeichnet, dass** der Schleppabstand als Differenz zwischen Soll- und Ist-Position bzw. zwischen Soll- und Ist-Positionsänderung des Manipulators im Koordinatenraum bestimmt wird.

10. Verfahren nach einem der vorhergehenden Ansprüche 7 bis 9, **dadurch gekennzeichnet, dass** die Soll-Position bzw. Soll-Positionsänderung in einem von dem Arbeits- und dem Koordinatenraum und die Ist-Position bzw. Ist-Positionsänderung in dem anderen von dem Arbeits- und dem Koordinatenraum bestimmt wird; und die Ist-Position bzw. Ist-Positionsänderung in den einen von dem Arbeits- und dem Koordinatenraum transformiert und der Schleppabstand als Differenz zwischen Soll- und transformierter Ist-Position bzw. Soll- und transformierter Ist-Positionsänderung in dem einen von dem Arbeits- und dem Koordinatenraum bestimmt wird; oder die Soll-Position ($\mathbf{x}_s$) bzw. Soll-Positionsänderung in den anderen von dem Arbeits- und dem Koordinatenraum transformiert ($\mathbf{F}^{-1}(\mathbf{x}_s)$) und der Schleppabstand als Differenz zwischen transformierter Soll- und Ist-Position ($\Delta = \mathbf{F}^{-1}(\mathbf{x}_s) - \mathbf{q}$) bzw. zwischen trans-

formierter Soll- und Ist-Positionsänderung in dem anderen von dem Arbeits- und dem Koordinatenraum bestimmt wird (S30, S80).

**11.** Verfahren nach Anspruch 10, **dadurch gekennzeichnet, dass** die Übereinstimmung von Arbeits- und Konfigurationsraum überprüft wird.

**12.** Verfahren nach Anspruch 11, **dadurch gekennzeichnet, dass** die transformierte Position bzw. Positionsänderung zurück transformiert und mit der Ausgangsposition bzw. Ausgangspositionsänderung vor der Transformation verglichen wird (S60).

**13.** Verfahren nach einem der vorhergehenden Ansprüche, **dadurch gekennzeichnet, dass** ein zulässigere Bereich Minimal- und/oder Maximalwerte umfasst.

**14.** Verfahren nach einem der vorhergehenden Ansprüche, **dadurch gekennzeichnet, dass** ein zulässiger Bereich in Abhängigkeit von einem Zustand des Manipulators, insbesondere einer Bewegungsgeschwindigkeit, und/oder in Abhängigkeit von einem Umgebungszustand, insbesondere der An- oder Abwesenheit von Hindernissen bestimmt wird.

**15.** Überwachungsvorrichtung für einen Manipulator, insbesondere einen Roboter (1), mit:

einer Einrichtung (5) zur Bestimmen (S20) einer von dem Manipulator anzufahrenden Soll-Position ($x_s$, $q_s$) und/oder Soll-Positionsänderung;
einer Einrichtung (4) zum Prüfen (S40), ob diese Soll-Position bzw. Soll-Positionsänderung in einem zulässigen Positionsbereich ($X_z$) liegt; und zum Ausgeben einer Alarmmeldung ($A_3$), wenn die Soll-Position bzw. Soll-Positionsänderung nicht in dem zulässigen Positionsbereich liegt (S50), wobei die Überwachungsvorrichtung zur Durchführung eines Verfahrens nach einem der vorhergehenden Ansprüche eingerichtet ist.

**16.** Computerprogramm, dass ein Verfahren nach einem der Ansprüche 1 bis 14 ausführt, wenn es in einer Überwachungsvorrichtung nach Anspruch 15 abläuft.

**17.** Computerprogrammprodukt mit Programmcode, der auf einem maschinenlesbaren Träger gespeichert ist und ein Computerprogramm nach Anspruch 16 umfasst.

Fig. 1

Fig. 2

$$x_S(t_E) = (x_E, y_E, z_E, \alpha_E, \beta_E, \gamma_E)$$

S10

S20
$$x_S(t_1),$$
$$x_S(t_2),$$
$$\vdots$$

5

S30
$$q_S = (q_1, q_2 \ldots q_6)$$
$$= F^{-1}(x_S)$$

q

S80
$$\Delta = q_S - q$$

S60

S40

S90
$$\Delta \in \Delta_Z?$$
$$|x_S - F(q_S)| < \varepsilon?$$
$$x_S \in X_Z?$$

S100
$A_1$

S70
$A_2$

S50
$A_3$

4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1267234 B1